# EUROPEAN PATENT SPECIFICATION

(11) **EP 2 352 976 B1**
(45) Date of publication and mention of the grant of the patent: **25.06.2014**
(21) Application number: 09752888.9
(22) Date of filing: 06.11.2009
(51) Int. Cl.: G01K 13/00, G01K 13/10, A23L 3/00, A23L 3/36, F25D 29/00

(54) **A temperature sensor unit**
Eine Temperatursensoreinheit
Un capteur de température

(30) Priority: 06.11.2008 GB 0820339
(43) Date of publication of application: 10.08.2011
(73) Proprietor: Universal Master Products Limited, Kent BR4 9WL (GB)
(72) Inventor: LAMSTAES, Andre Lucien, Kent BR4 9PS (GB); BANHAM, Harry, Dorset BH1 4PW (GB); LAMSTAES, Guy, Kent BR4 9PS (GB)
(74) Representative: Bankes, Stephen Charles Digby
(86) International application number: PCT/GB2009/051490
(87) International publication number: WO 2010/052501

(56) References cited:
- EP-A2- 0 928 935
- WO-A1-01/37062
- WO-A2-2007/084445
- GB-A- 874 144
- GB-A- 2 235 780
- GB-A- 2 405 477
- US-A- 3 690 175
- US-A- 4 003 124
- US-A- 4 028 944
- US-A1- 2003 132 303
- US-A1- 2004 018 223
- US-A1- 2007 098 039
- KÖNIG, H., HERMES, M.: "Trennung, Identifizierung und Bestimmung von Treibgasen und Lösungsmitteln in Aerosol-Produkten mittels Gas-Chromatographie" CHROMATOGRAPHIA, vol. 14, no. 6, 1 June 1981 (1981-06-01), pages 351-354, XP002570462
- NERIN, ET AL.: "Behavior of some solid food simulants in contact with several plastics used in microwave ovens" J. AGRIC. FOOD CHEM., vol. 50, no. 25, 2 November 2002 (2002-11-02), pages 7488-7492, XP002570463 DOI: 10.1021/jf0257143
- NERIN, C., ET AL.: "Kinetic migration studies using Porapak as solid-food simulant to assess the safety of paper and board as food-packaging materials" ANAL BIOANAL CHEM, vol. 387, 20 January 2007 (2007-01-20), pages 2283-2288, XP002570464 DOI: 10.1007/s00216-006-1080-3
- Römpp Online, Version 3.6: "Stichwort: Polyolefin-Wachse"[Online] March 2002 (2002-03), XP002570465 Georg Thieme Verlag Retrieved from the Internet: URL:http://www.roempp.com/prod/index1.html > [retrieved on 2010-02-25]

## Description

This invention relates to apparatus for controlling and monitoring temperature, and in particular to a sensor unit to be installed in a space in which material such as food is to be kept at a predetermined temperature. The invention has particular utility in refrigeration and freezer systems for foodstuffs and the like.

In a conventional refrigeration system, a fluid refrigerant is circulated by a pump through a compressor, a condenser and an evaporator, the evaporator being in a heat-exchange relationship with a cavity in which food or other material is to be stored at reduced temperature. The refrigerant enters the evaporator in liquid form and is caused to evaporate, for example by passing it through an expansion valve, thereby absorbing latent heat of evaporation from its surroundings and cooling the inside of the cavity. The gaseous refrigerant then passes through the compressor and condenser, and is recondensed to a liquid when not in a heat-exchange relationship with the storage cavity, dispersing latent heat to the surrounding atmosphere.

In order to keep the storage cavity at an even temperature, the refrigeration system operates intermittently in response to the temperature sensed in the storage cavity, for example by a thermocouple or the like. When the sensed temperature rises above a predetermined value, the system is switched on and refrigerant is circulated through it until the sensed temperature again drops below the required level.

In recent years the move away from chlorofluorocarbon (CFC) - based refrigerants, thought to attack the ozone layer in the upper atmosphere, has resulted in the development of a number of new refrigerants, some as interim replacements and others as long-term substitutes for CFCs. Many of these refrigerants have however been found to have inherent problems, such as lower efficiency and higher running pressures.

Another major environmental consideration in recent years has been the need to reduce energy consumption, for environmental reasons and in response to rapidly increasing energy costs.

Conventional refrigeration systems, in which the temperature sensor senses the air temperature within the storage cavity, tend to operate a high number of cycles within a given period since the air temperature in the cavity can fluctuate rapidly, for example in response to a refrigerator door being opened or following an auto-defrost. In order to increase the efficiency of the system and reduce energy consumption, there is a need to reduce the number and frequency of cooling cycles.

GB-A-2356454 and EP-A-1244949 disclose a sensor unit for a refrigeration system in which the temperature sensor projects into a body of food simulant material, so as to be in direct contact with it, whereby the temperature sensed approximates much more closely to that of the contents of the storage cavity than if the sensor were simply projecting into the atmosphere of the cavity. The temperature of solid liquid material stored in the cavity generally rises or falls much more slowly than that of the surrounding air, which is subject to more frequent and larger fluctuations. The effect of matching the temperature sensed in the cavity to that of the contents, whose temperature rises and falls more slowly, rather than the surrounding atmosphere, is that the contents of the cavity can be kept at an even temperature with fewer, but longer refrigeration cycles and consequently reduce energy consumption.

US-A-2007/098039 discloses a reusable, resettable critical temperature indicator which comprises a multiple polymer such as paraffin wax, containing coloured floats such as hollow glass spheres or plastic micro balloons. As the temperature of the was rises it melts, allowing the coloured floats to rise, thereby indicating that a critical temperature has been reached. A similar device is disclosed in US-A-4028944, in which a temperature indicator comprises a container holding a polymer-containing aqueous gel as a continuous phase with a dispersed phase therein, the gel liquefying from gel to liquid below a threshold temperature, allowing a change of position of the dispersed phase to indicate the temperature drop.

GB-A-874144 discloses a method of manufacturing a flame retardant foam, wherein expandable polystyrene beads are mixed with chlorinated paraffin wax and the resulting mixture is expanded into a closed cellular foam.

One known food simulant material, known as Porapak, is a three-dimensionally cross linked polystyrene material as disclosed for example by König and Hermes in Chromatographia, Vol 14, No. 6, 01/06/1981 pp.351-354, XP002570462. It may have a particle size of 177 to 149µm, as disclosed by Nerin et al in J Agric. Food Chem. Vol. 59, No. 25, 02/11/02, pp.7488-7492, XP002570463. Porapak is also disclosed as a food simulant by Nerin et al, in Anal. Bioanal. Chem Vol 387, 20/01/2007, pp.2283-2288, XP002570464.

US-A-3690175 discloses apparatus for predicting the surface temperature of packaged foodstuff such as meat, when the packages are exposed to a refrigerated environment. A model of red beef steak manufactured from two metallic plates with insulating material sandwiched between them has an exterior surface mixtures and coated the same colour as the meat being simulated and the temperature of the plate mating with the insulating material is measured by means of a thermo couple connected to an electric meter.

There remains however a need for food simulant materials whose reaction to temperature fluctuations follows more closely that of food items store in a refrigerator.

According to a first aspect of the present invention, there is provided a temperature sensor unit comprising a housing enclosing a plurality of adjacent compartments each containing a block of food simulant material comprising a solid wax in which are distributed a plurality of gas-filled polymeric particles, and a temperature sensor projecting into each said block, said temperature sensors being in contact with the food simulant material at thermally equivalent positions, a first said sensor being connected to a thermostatic refrigerator control and a second said sensor being connected to outside means for displaying or otherwise communicating the temperature measured. The particles may be in the form of gas-filled microcapsules or beads of an expanded polymer, for example expanded polystyrene, each containing a plurality of gas-filled cells. The gas is preferably air, but other gases such as inert gases or carbon dioxide could also be used. The particles are preferably spherical and preferably have a mean particle size of not more than 5mm and more preferably 20µm to 1 mm. The density of particle distribution may be varied according to the required heat capacity and thermal conductivity of the food simulant material.

In a preferred embodiment of the invention the gas-filled particles are microcapsules. These are preferably of polystyrene and preferably have a mean particle diameter of 50 to 500µm.

The content of the gas-filled polymer particles is preferably in a range of 5 to 40% by volume, preferably 10 to 30% typically about 25 volume %.

In use, each food simulant material used in the invention is preferably in the form of a block confined within a rigid housing through a wall of which the temperature sensor can be inserted. The block is preferably cylindrical in shape and confined within a housing of similar shape, the temperature sensor being inserted radially towards the centre of the block.

Displaying externally the temperature being sensed in the food simulant material enables the operation of the refrigerator or other device in which the unit is used to be monitored, so that any malfunction can be seen as soon as it arises. A persistent deviation of the temperature from the desired operating temperature will mean that the refrigeration cycle is not under proper control.

By 'thermally equivalent' it is meant that when the device is placed in a refrigerated environment the food simulant material surrounding the two or more sensors will be at substantially the same temperature around each sensor and will react in the same way to changes in temperature so that the temperature displayed will at all times be the temperature to which the thermostat is reacting.

The food simulant material may be a solid wax having a heat capacity and thermal conductivity similar to that of typical stored foodstuffs, so that the temperature measured will resemble as closely as possible the temperature of the foodstuffs stored. Typical food simulant materials suitable for use in the device of the present invention are described in more detail in EP-A-1244949. While the material may be a food-grade liquid or solid, a food-grade wax is preferred, for example hydrocarbon wax or cheese wax, a blend of hydrocarbon waxes and food-grade white oil. Gas-filled polymeric particles may be added to any of these. The term 'wax' covers a wide range of materials such as polymensation products of monomers, as disclosed in 'Römpp Online", 25/02/10, Georg Thieme Verlag XP002570465.

The gas filled particles help to compensate for the inadequacies of new non-CFC types of refrigerant whilst maintaining equivalent food temperature and adjusting the speed of heat transfer to give time for the refrigerant in the system to settle down and reach a balanced state, to achieve smoother stand-up and an efficient refrigeration cycle.

The food simulant material is contained in a housing with a plurality of compartments, each containing a body of food simulant material and with a temperature sensor projecting into the food simulant in each compartment. The compartments should be substantially identical in terms of size and exposure to the ambient atmosphere, and are adjacent one another. The housing preferably contains a plurality of cylindrical compartments. A temperature sensor may project radially into each compartment through its circumferential wall, and may terminate at or adjacent the cylindrical axis of the compartment. The cylindrical walls of the compartment are preferably spaced from outer walls of the housing. The compartments may communicate with one another.

One preferred embodiment of the temperature sensing unit of this invention comprises an outer housing with a flat bottom surface, sidewalls and a flat cover, the casing enclosing a plurality of compartments adjacent one another, each defined by a substantially cylindrical wall, integral with the bottom surface and open in the direction of the cover and a temperature sensor projecting radially into each said chamber through an aperture in a sidewall of the housing. Each sensor may be connected for the wire transfer of data.

In addition to the temperature sensors for the thermostat and the external display, the device may comprise a third sensor for additional features such as a light-sensitive alarm against product theft, a scanner to monitor food labelling, e.g. date of use of product, humidity or other data required by the user.

An embodiment of the invention will now be described, with reference to the accompanying drawings, wherein:
FIGURE 1 is a perspective view of a housing of a device according to the present invention with its cover removed;
FIGURE 2 is a side elevation in the direction of arrow 2, showing one temperature sensor connection in place;
FIGURE 3 is a cross-sectional view on the lines III-III of Figure 2, additionally showing in cross-section the components of a temperature sensor attachment;
FIGURES 4a, 4b and 4c are elevations of the attachment components shown in Figure 3;
FIGURE 5 is an underside view of a cover for the housing of Figure 1; and
FIGURE 6 is a side elevation of the cover of Figure 5.

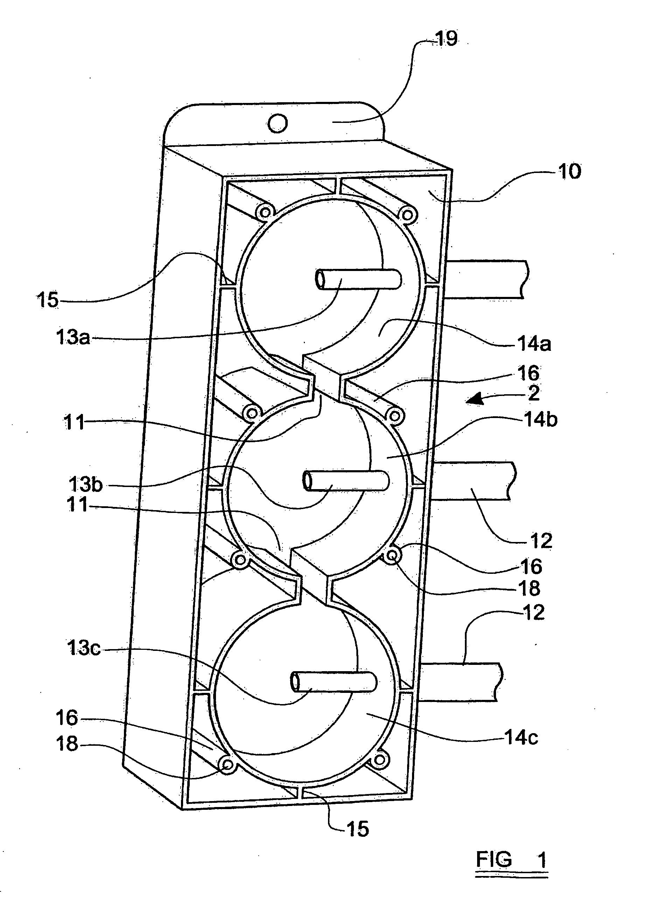

Referring first to Figure 1, an elongate housing 10, suitably of plastics material which may be injection-moulded, is of rectangular shape and contains three cylindrical compartments, 14a, 14b, 14c, integrally moulded with a rear wall of the housing. The compartments are connected by narrow passages 11 and spaced from the outer walls of the housing by integrally moulded webs 15.

The compartments 14a, 14b, 15c may suitably be from 3 to 8cm in diameter and 2 to 4cm deep.

Each of the three cylindrical compartments is intended to contain a cylindrical block of solid food simulant material such as cheese wax, for example any of the materials discussed above.

A flange 19, formed integrally as an extension of the rear wall of the housing, serves as a hanging tag for hanging the unit in a refrigerator compartment or the like.

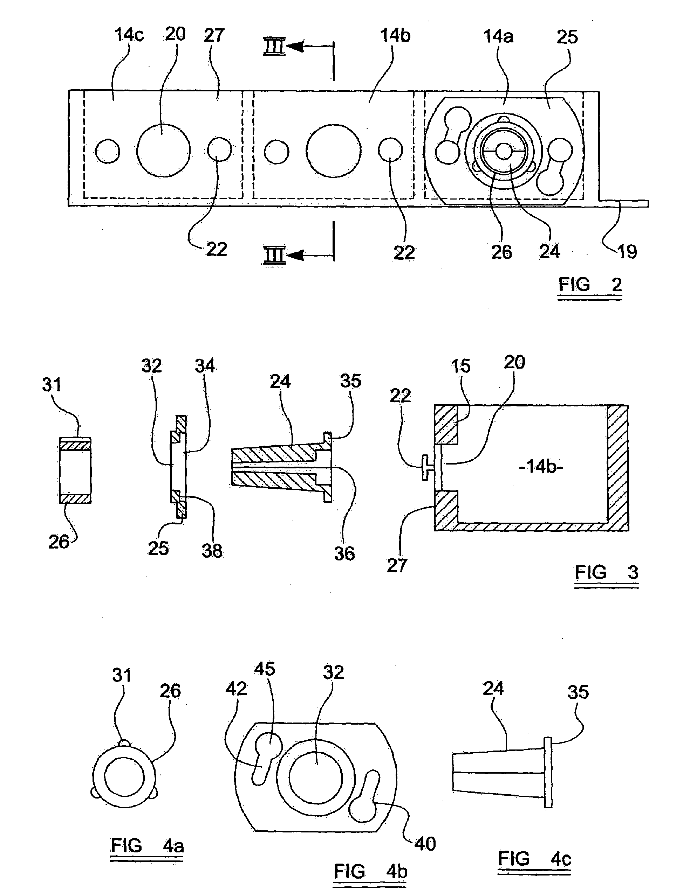

Into each of the cylindrical compartments 14a, 14b, 14c a temperature sensor 13a, 13b, 13c projects radially to the centre of the cylinder through an aperture 20 in a side wall of the housing, shown in Figure 2. Leads 12 from the sensors convey sensed temperature data to be used elsewhere. For example, the thermocouple 13a is connected to a thermostat operating the refrigeration system so that whenever the temperature sensed by the thermocouple 13a at the centre of a block of food simulant material contained in compartment 14a falls below a predetermined level a refrigeration cycle is switched on.

The temperature sensed by thermocouple 13b in a block of food simulant material in compartment 14b is conveyed to a digital read-out or display outside the refrigerator, so that the temperatures maintained in the refrigerator can be monitored from outside.

Temperatures sensed by the third thermocouple 13c may be used for a variety of different purposes, as outlined above.

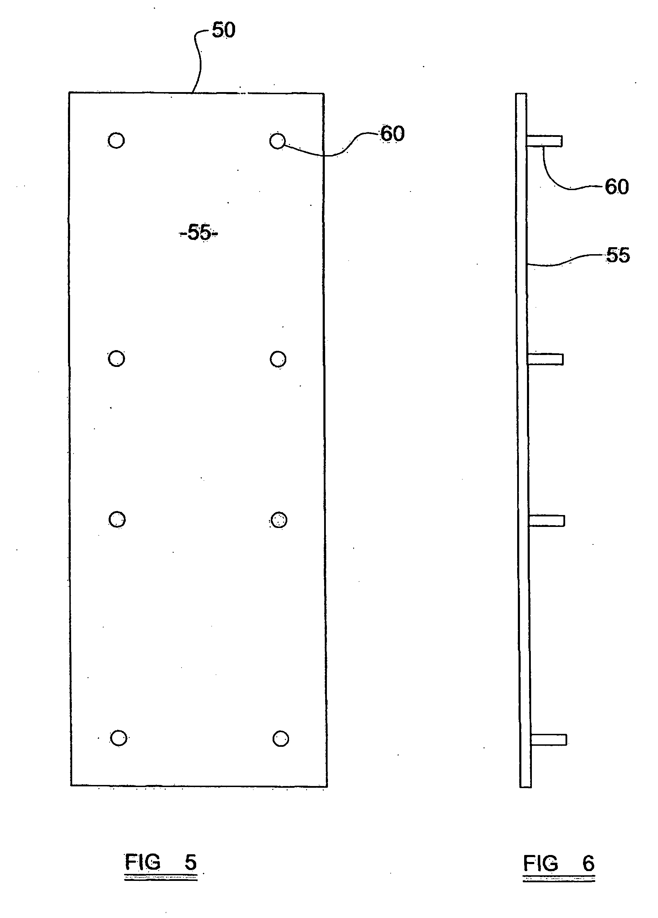

Integrally moulded around the outsides of the cylindrical compartments 14a, 14b, 14c are cylindrical sleeves 16 with axial bores to receive pins 60 projecting from one side 55 of a cover 50 as shown in Figures 5 and 6. The cover 50 can thus be used to close the housing 10, one pin 60 fitting into each of the channels 18 and being retained by a friction fit.

Referring now to Figure 2, apertures 20 in a side wall 27 of the housing allow the passage of thermocouple sensors from fittings secured to the housing wall. On each side of each aperture 10 is a projection 20 of T-shaped cross-section and circular in plan view, to which an attachment plate 25 can be secured. In Figure 2, only one such attachment plate is shown in position.

The fittings for securing a temperature sensor in position are shown in cross-section in Figure 3, which also shows a cross-section through the housing. A lead (not shown) from a sensor can be held between two separable halves of an attachment sleeve 24 which has an annular flange 35 around one end and tapers slightly, in a conical shape, in a direction away from the flange 35. Flange 35 is designed to abut the side wall 27 around aperture 20 to support a lead from a thermocouple projecting into compartment 14b. An attachment plate 25 fits over the sleeve, its tapered projecting portion passing through a circular aperture 32 so that the annular flange 35 is received in an annular recess 38. A friction collar 26 is then fitted over the sleeve, and pushed up against the plate 25 to create a single unit with a lead passing through the sleeve 24. The plate 25 has keyhole slots 40 on each side of its central aperture 32, each key slot consisting of a circular aperture 45 and a narrower slot 42 extending away from it. The plate 25 can be offered up to the side wall of the housing so that the circular heads 22 of the projections on either side of an aperture 20 pass through the circular apertures 40 of the plate which is then pushed up against the side wall of the housing and rotated in a clockwise direction so that the slots 42 move under the circular ends of projections 22 to lock the plate against the housing with a thermocouple projecting from the end of sleeve 24 into the housing and terminating at the centre of one of the three cylindrical compartments 14a, 14b, 14c.

The aligned and intercommunicating configuration of the compartments 14a, 14b and 14c means that for certain applications of the invention, notably those in which the food simulant contains gas-filled particles, a single elongate temperature sensor such as a thermistor can be inserted to extend through all three compartments.

Figure 2 shows one plate 25 in place with sleeve 24 passing through it and friction collar 26 fitted over the sleeve.

It can be seen that the provision of two or three identically-sized bodies of food simulant material, in adjacent, identically-shaped compartments equally spaced from the sidewalls of the housing to give similar exposure to the temperature prevailing outside the housing and a temperature sensor projecting radially into each body of heat simulant material in close contact therewith at a central point thereof, enables the same temperature to be picked up by two or more sensors and used for different purposes.

## Claims

1. A temperature sensor unit comprising a housing (10) enclosing a plurality of adjacent compartments (14a, 14b, 14c), each containing a block of food simulant material comprising a solid wax in which are distributed a plurality of gas-filled polymeric particles, and a temperature sensor (13a, 13b, 13c) projecting into each said block, said temperature sensors being in contact with the food simulant material at thermally equivalent positions, a first said sensor being connected to a thermostatic refrigerator control and a second said sensor being connected to outside means for displaying or otherwise communicating the temperature measured.

2. A temperature sensor unit according to claim 1 wherein the blocks of food simulant material are cylindrical in shape and are confined within adjacent cylindrical compartments (14a, 14b, 14c), a temperature sensor (13a, 13b, 13c) extending radially into each said block to a position at or adjacent its cylindrical axis.

3. A temperature sensor unit according to claim 1 or claim 2 wherein the gas-filled particles are microcapsules.

4. A temperature sensor unit according to any preceding claim wherein the gas-filled particles are made of polystyrene.

5. A temperature sensor unit according to claim 4 wherein the gas-filled particles are beads of expanded polystyrene.

6. A temperature sensor unit according to any preceding claim wherein the polymeric particles are filled with air.

7. A temperature sensor unit according to any preceding claim wherein the gas-filled polymeric particles have a diameter of 50 to 500µm.

8. A temperature sensor unit according to any preceding claim wherein the content of said polymeric particles is 5 to 40 volume%

9. A temperature sensor unit according to any preceding claim wherein the content of said polymeric particles is 10 to 30 volume%.

## Patentansprüche

1. Temperatursensoreinheit, umfassend ein Gehäuse (10), das mehrere nebeneinander liegende Abteile (14a, 14b, 14c) einschließt, von denen jedes einen Block aus Lebensmittelsimulationsmaterial enthält, das ein festes Wachs umfasst, in dem eine Vielzahl gasgefüllter Polymerpartikel verteilt sind, und einen Temperatursensor (13a, 13b, 13c), der in jeden der Blöcke hineinragt, wobei die Temperatursensoren an thermisch äquivalenten Positionen mit dem Lebensmittelsimulationsmaterial in Kontakt sind, ein erster der Sensoren mit einer thermostatischen Kühleinrichtungssteuerung verbunden ist und ein zweiter der Sensoren mit externen Mitteln zum Anzeigen oder sonstigen Kommunizieren der gemessenen Temperatur verbunden ist.

2. Temperatursensoreinheit gemäß Anspruch 1, wobei die Blöcke aus Lebensmittelsimulationsmaterial eine zylindrische Form haben und in nebeneinander liegenden zylindrischen Abteilen (14a, 14b, 14c) eingeschlossen sind, wobei sich ein Temperatursensor (13a, 13b, 13c) radial in jeden der Blöcke hinein zu einer Position an oder neben ihrer Zylinderachse erstreckt.

3. Temperatursensoreinheit gemäß Anspruch 1 oder Anspruch 2, wobei die gasgefüllten Partikel Mikrokapseln sind.

4. Temperatursensoreinheit gemäß einem der vorhergehenden Ansprüche, wobei die gasgefüllten Partikel aus Polystyrol hergestellt sind.

5. Temperatursensoreinheit gemäß Anspruch 4, wobei die gasgefüllten Partikel Perlen aus geschäumtem Polystyrol sind.

6. Temperatursensoreinheit gemäß einem der vorhergehenden Ansprüche, wobei die Polymerpartikel mit Luft gefüllt sind.

7. Temperatursensoreinheit gemäß einem der vorhergehenden Ansprüche, wobei die gasgefüllten Polymerpartikel einen Durchmesser von 50 bis 500 µm haben.

8. Temperatursensoreinheit gemäß einem der vorhergehenden Ansprüche, wobei der Inhalt der Polymerpartikel 5 bis 40 Volumenprozent beträgt.

9. Temperatursensoreinheit gemäß einem der vorhergehenden Ansprüche, wobei der Inhalt der Polymerpartikel 10 bis 30 Volumenprozent beträgt.

## Revendications

1. Unité de capteur de température comprenant un boîtier (10) entourant une pluralité de compartiments (14a, 14b, 14c) adjacents, chacun contenant un bloc de matière de simulant alimentaire comprenant une cire solide, dans lequel sont réparties une pluralité de particules polymères remplies de gaz, et un capteur de température (13a, 13b, 13c) faisant saillie dans chacun desdits blocs, lesdits capteurs de température étant en contact avec la matière de simulant alimentaire dans des positions thermiquement équivalentes, un premier desdits capteurs étant raccordé à une commande de réfrigérateur thermostatique et un second desdits capteurs étant raccordé à des moyens extérieurs pour afficher ou communiquer autrement la température mesurée.

2. Unité de capteur de température selon la revendication 1, dans laquelle les blocs de matière de simulant alimentaire ont une forme cylindrique et sont confinés à l'intérieur de compartiments cylindriques (14a, 14b, 14c) adjacents, un capteur de température (13a, 13b, 13c) s'étendant radialement dans chacun desdits blocs jusqu'à une position au niveau de ou de manière adjacente à son axe cylindrique.

3. Unité de capteur de température selon la revendication 1 ou la revendication 2, dans laquelle les particules remplies de gaz sont des microcapsules.

4. Unité de capteur de température selon l'une quelconque des revendications précédentes, dans laquelle les particules remplies de gaz sont réalisées à partir de polystyrène.

5. Unité de capteur de température selon la revendication 4, dans laquelle les particules remplies de gaz sont des billes de polystyrène expansé.

6. Unité de capteur de température selon l'une quelconque des revendications précédentes, dans laquelle les particules polymères sont remplies d'air.

7. Unité de capteur de température selon l'une quelconque des revendications précédentes, dans laquelle les particules polymères remplies de gaz ont un diamètre de 50 à 500 µm.

8. Unité de capteur de température selon l'une quelconque des revendications précédentes, dans laquelle le contenu desdites particules polymères est de 5 à 40% en volume.

9. Unité de capteur de température selon l'une quelconque des revendications précédentes, dans laquelle le contenu desdites particules polymères est de 10 à 30 % en volume.
